# FASCICULE DE BREVET EUROPEEN

(11) **EP 4 045 401 B1**
(45) Date de publication et mention de la délivrance du brevet: **03.12.2025**
(21) Numéro de dépôt: 20790002.8
(22) Date de dépôt: 15.10.2020
(51) Int. Cl.: B64C 25/28, F16H 25/02, E05B 15/00, E05B 81/64, B64D 45/00

(54) **BOITIER D'ACCROCHAGE MUNI DE MOYENS DE DETECTION DE RETENUE**
SICHERUNGSMECHANISMUS MIT RETENTIONSDETEKTIONSMITTELN
UPLOCK PROVIDED WITH RETENTION DETECTION MEANS

(30) Priorité: 17.10.2019 FR 1911648
(43) Date de publication de la demande: 24.08.2022
(73) Titulaire: Safran Landing Systems, 78140 Vélizy-Villacoublay (FR)
(72) Inventeur: PASCAL, Vincent, 77550 MOISSY-CRAMAYEL (FR); DUFAY, Ludovic, 77550 MOISSY-CRAMAYEL (FR); ARBENTZ, Michel, 77550 MOISSY-CRAMAYEL (FR)
(74) Mandataire: Cabinet Boettcher
(86) Numéro de dépôt international: PCT/EP2020/079135
(87) Numéro de publication internationale: WO 2021/074349

(56) Documents cités:
- EP-A1- 1 342 663
- EP-B1- 1 342 663
- WO-A1-2005/005252
- WO-A1-2018/189299

## Description

### ARRIERE PLAN DE L'INVENTION

L'invention concerne un boîtier d'accrochage tel que ceux qui sont utilisés dans les aéronefs pour la retenue en position escamotée d'atterrisseurs de l'aéronef ou de portes de fermeture de soutes, et plus généralement pour la retenue de tout élément mobile de l'aéronef dans l'une de ces positions.

De façon connue en soi, un tel boîtier d'accrochage comprend un crochet monté pivotant sur le boîtier entre une position de retenue et une position de libération, et un organe de verrouillage du crochet qui est rappelé vers une position de verrouillage du crochet quand celui-ci est amené en position de retenue, et qui peut être déplacé vers une position de déverrouillage pour permettre au crochet de basculer vers la position de libération et ainsi libérer l'élément mobile.

Le crochet coopère avec une olive de l'élément mobile qui, quand l'élément mobile arrive vers la position dans laquelle il doit être retenu, pousse le crochet vers la position de retenue dans laquelle le crochet est automatiquement verrouillé par l'organe de verrouillage. L'olive de l'élément mobile est alors emprisonnée dans le crochet et ne peut s'en libérer. Pour permettre la libération de l'élément mobile, il convient de repousser l'organe de verrouillage en position de déverrouillage, par exemple au moyen d'un actionneur de déverrouillage. L'élément mobile est alors libre de quitter la position dans laquelle il était retenu, l'olive entraînant le crochet de la position de retenue vers la position de libération.

Le boîtier d'accrochage est habituellement pourvu d'un capteur de proximité pour détecter la position dans laquelle l'organe de verrouillage se trouve. A cet effet, le boîtier d'accrochage est équipé d'une cible mobile entre une position éloignée du capteur de proximité et une position proche du capteur de proximité, chaque position de la cible étant associée à l'une des positions de l'organe de verrouillage, de sorte que le signal électrique généré par le capteur de proximité change quand l'organe de verrouillage passe de la position de déverrouillage à la position de verrouillage et réciproquement. La détection de l'organe de verrouillage en position de verrouillage signifie que l'olive a repoussé le crochet vers la position de retenue dans laquelle il est automatiquement verrouillé, de sorte que cette détection correspond également à une détection indirecte de la retenue de l'élément mobile.

Cependant, il a pu arriver, alors que le crochet était bien détecté en position de retenue, que l'olive n'était en réalité pas retenue par le crochet en raison de la rupture d'une partie du crochet l'empêchant de retenir l'olive. Dans ces circonstances exceptionnelles, la détection du crochet en position de retenue ne garantit pas que l'élément mobile soit effectivement retenu.

Il a été proposé dans le document WO -A- 2018/189299 de munir le boîtier d'un deuxième capteur de proximité pour détecter si l'olive est effectivement présente dans le crochet quand celui-ci est en position de retenue. A cet effet, une deuxième cible est portée par un levier indicateur repoussé par l'olive elle-même, et qui place la deuxième cible dans une position éloignée du capteur si l'olive n'est pas dans le crochet, et dans une position proche du deuxième capteur si l'olive est dans le crochet en position retenue. Ainsi, l'élément mobile sera considéré comme effectivement retenu si le premier capteur indique que l'organe de verrouillage est en position de verrouillage et si le deuxième capteur indique que l'olive est bien présente dans le crochet. Cette disposition implique l'utilisation forcément plus complexe de deux capteurs, et nécessite de réaliser une combinaison logique de deux signaux.

Dans ce même document, il a également été proposé de n'utiliser qu'un seul capteur de proximité, en plaçant celui-ci sur le boîtier d'accrochage de sorte qu'il soit apte à détecter la présence simultanée à proximité de deux cibles liées respectivement à l'organe de verrouillage et au levier indicateur, les deux cibles ne s'approchant du capteur de proximité que si le crochet est en position de retenue et si l'olive est présente dans le crochet. La détection simultanée de plusieurs cibles proches par un même capteur est cependant délicate à régler et peut générer de fausses détections.

### OBJET DE L'INVENTION

L'invention a pour but de proposer un boîtier d'accrochage permettant la détection sûre du crochet en position de retenue et de l'olive présente dans le crochet, sans nécessiter des traitements logiques ou des réglages multi-cibles délicats.

### RESUME DE L'INVENTION

En vue de la réalisation de ce but, on propose un boîtier d'accrochage pour la retenue sélective d'un élément mobile conformément à la revendication 1.

Des modes de réalisation préférés de l'invention sont décrits dans les revendications dépendantes.

Lorsqu'il est indiqué que deux éléments sont en interaction cinématique, on entend ici que le mouvement d'un élément provoque le mouvement de l'autre élément, soit directement, soit via un ou plusieurs éléments intermédiaires. Ainsi, conformément aux dispositions de l'invention, le signal du capteur n'est modifié que si l'unique cible change de position, ce qui ne peut se produire que si les deux conditions recherchées, à savoir le crochet en position de retenue et l'olive présente dans le crochet, sont simultanément remplies. On réalise donc selon l'invention une fonction logique et mécanique, qui présente l'avantage de n'utiliser qu'une seule cible et ne requiert aucun traitement logique.

Selon l'invention, le boîtier d'accrochage comporte un levier indicateur qui interagit avec l'olive et qui est mobile entre une première position indicatrice de l'absence de l'olive dans le crochet et une deuxième position indicatrice de la présence de l'olive dans le crochet, la cible ne pouvant se déplacer vers l'autre de ses positions que si l'organe de verrouillage est en position de verrouillage et le levier indicateur est dans la deuxième position indicatrice de la présence de l'olive dans le crochet.

Ainsi, la cible est en interaction cinématique indirecte avec le crochet et l'olive par l'intermédiaire de l'organe de verrouillage et du levier indicateur, ce qui est plus facile à organiser qu'une interaction directe avec le crochet et l'olive.

Selon l'invention la cible est portée par un support mobile de sorte que le levier indicateur, l'organe de verrouillage et le support mobile soient montés pivotants selon un même axe de pivotement. Avantageusement, le support mobile comporte une surface d'appui coopérant avec des surfaces d'appui respectives de l'organe de verrouillage et du levier indicateur.

### BREVE DESCRIPTION DES DESSINS

L'invention sera mieux comprise à la lumière de la description détaillée qui suit d'un mode particulier de réalisation de l'invention en référence aux figures des dessins annexés parmi lesquelles :
[Fig. 1] la figure 1 est une vue schématique de face d'un boîtier d'accrochage selon un mode particulier de réalisation de l'invention, illustré alors que le crochet est en position de libération, l'olive de l'élément mobile s'approchant du crochet, le levier indicateur étant représenté transparent et délimité en pointillés pour plus de clarté ;
[Fig. 2] la figure 2 est une vue analogue à celle de la figure 1, illustrant le crochet en position de verrouillage alors que l'olive est effectivement retenue par le crochet ;
[Fig. 3] la figure 3 est une vue analogue à celle de la figure 1, illustrant le crochet en position de verrouillage alors que l'olive s'est libérée du crochet à la suite d'une rupture d'une partie de celui-ci ;
[Fig. 4] la figure 4 est une vue en partielle perspective au niveau du pivot articulant l'organe de verrouillage, le levier indicateur et le support mobile, montrant leurs surfaces d'appui respectives.

### DESCRIPTION DETAILLEE DE L'INVENTION

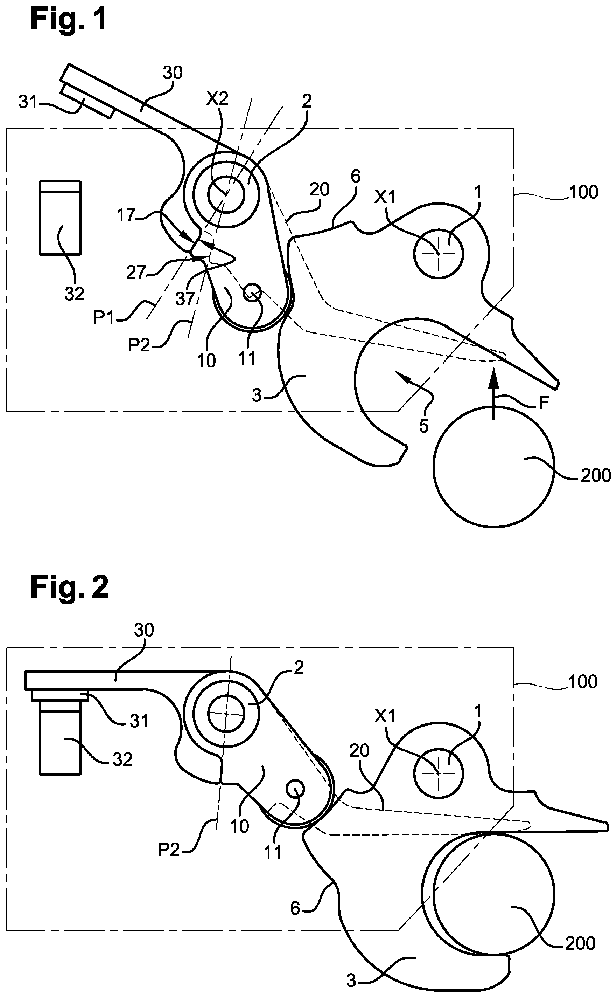

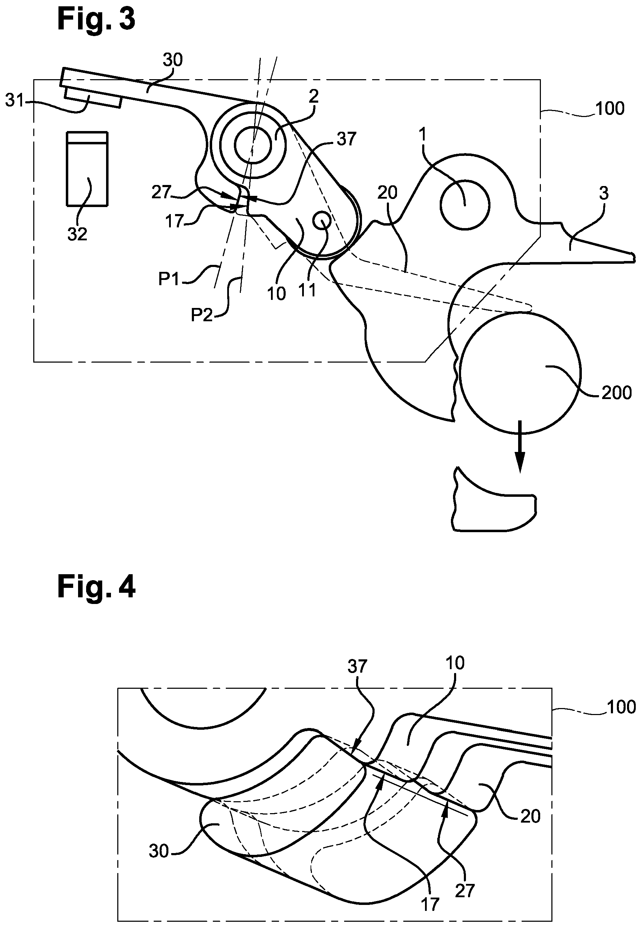

En référence aux figures, le boîtier d'accrochage de l'invention comporte une platine 100 portant un premier pivot 1 et un deuxième pivot 2, définissant des axes de pivotement X1 et X2 parallèles. Un crochet 3 est monté pivotant sur le premier pivot 1 selon l'axe X1 entre une position de libération illustrée à la figure 1 vers laquelle il est rappelé par un ressort (non représenté), et une position de retenue illustrée sur les figures 2 et 3. Le crochet 3 comporte une partie de crochetage 5 dans laquelle une olive 200 d'un élément mobile (par exemple un atterrisseur d'aéronef, ou une porte de soute) est destinée à être retenue par le boîtier d'accrochage pour immobiliser l'élément mobile (par exemple en position escamotée pour l'atterrisseur, ou en position fermée pour la porte de soute). Pour ce faire, l'élément mobile est déplacé par un actionneur de manœuvre et l'olive 200 suit la trajectoire F en repoussant le crochet 3 vers la position de verrouillage dans laquelle il retient l'olive 200. A cet effet, un organe de verrouillage 10 est monté pivotant sur le deuxième pivot 2 selon l'axe X2 et comporte un galet 11 qui est en permanence en appui sur un profil de came 6 du crochet 3. L'organe de verrouillage 10 pivote entre une position de déverrouillage illustrée à la figure 1, et une position de verrouillage illustrée sur les figures 2 et 3 dans laquelle il est rappelé automatiquement par un ressort (non représenté) et qu'il atteint automatiquement quand le crochet 3 arrive en position de retenue. Dans la position de verrouillage, l'organe de verrouillage 10 bloque le crochet 3 en position de retenue. Pour libérer l'olive 200, un actionneur de déverrouillage non représenté repousse l'organe de verrouillage 10 vers la position de déverrouillage, ce qui permet au crochet 3 de pivoter vers la position de libération et donc à l'olive 200 de quitter le crochet 3.

Le boîtier d'accrochage comporte par ailleurs un levier indicateur 20, également monté pivotant sur le deuxième pivot 2 selon l'axe X2, et mobile entre une position indicatrice de présence de l'olive 200 dans le crochet 3 illustrée à la figure 2, dans laquelle il est repoussé par l'olive 200 quand celle-ci approche du crochet 3, et une position indicatrice d'absence de l'olive 200 dans le crochet 3, illustrée sur les figures 1 et 3, vers laquelle le levier indicateur 20 est rappelé par un ressort (non représenté).

Enfin le boîtier d'accrochage comporte un support mobile 30 monté également pivotant sur le deuxième pivot 2 selon l'axe X2. Le support mobile porte une cible 31 qui est ainsi mobile entre une position éloignée d'un capteur de proximité 32 porté par la platine 100 comme illustré aux figures 1 et 3, et une position proche du capteur de proximité 32 comme illustré à la figure 2, et vers laquelle la cible 31 est rappelée par un ressort (non représenté). Le capteur de proximité 32 produit un signal électrique dont les caractéristiques changent lorsque la cible 31 passe d'une position à l'autre, ce qui permet de discriminer les deux positions de la cible 31.

Comme cela est plus visible à la figure 4, le support mobile 30 comporte une surface de butée 37 destinée à interagir mécaniquement avec des surfaces de butée en regard, à savoir une surface de butée 17 formée sur l'organe de verrouillage 10, et une surface de butée 27 formée sur le levier indicateur 20. La surface de butée 37 du support mobile 30 est, dans les situations illustrées aux figures 1 et 3, maintenue dans une position angulaire P1 (correspondant à la position éloignée de la cible 31) par au moins l'une des autres surfaces de butées 17, 27 de l'organe de verrouillage 10 ou du levier indicateur 20, tandis qu'elle est libre de venir jusqu'à la position angulaire P2 (correspondant à la position proche de la cible 31) dans la situation illustrée à la figure 2.

Le fonctionnement du boîtier d'accrochage de l'invention est le suivant. La situation de départ est illustrée à la figure 1 où le crochet 3 est en position de libération, l'organe de verrouillage 10 en position de déverrouillage et le levier indicateur 20 en position indicatrice d'absence d'olive dans le crochet 3. Dans cette position, les surfaces de butée 17 et 27 de l'organe de verrouillage 10 et du levier indicateur 20 sont en position angulaire P1 et coopèrent avec la surface de butée 37 du support mobile 30 pour maintenir la cible en position éloignée du capteur de proximité 32. L'élément mobile est alors manœuvré pour se rapprocher de sa position d'immobilisation. L'olive 200 se déplace alors selon la direction F et repousse le crochet 3 vers la position de retenue et le levier indicateur 20 vers la position indicatrice de présence de l'olive 200 dans le crochet 3. Quand le crochet 3 atteint la position de retenue, l'organe de verrouillage 10 se place automatiquement en position de verrouillage pour bloquer le crochet 3 en position de retenue. Dans cette position illustrée à la figure 2, les surfaces de butées 17, 27 de l'organe de verrouillage 10 et du levier indicateur 20 sont dans la position angulaire P2, ce qui permet au support mobile de pivoter jusqu'à ce que la surface de butée 37 soit en position angulaire P2, de sorte que la cible 31 est proche du capteur de proximité 32 dont le signal change, indiquant que l'olive a été correctement retenue par le crochet 3.

Dans l'hypothèse où le crochet 3 se brise et ne retient plus l'olive 200, comme illustrée à la figure 3, l'olive 200 peut quitter le crochet 3 (par exemple sous l'effet de la gravité) alors que celui-ci est bien immobilisé en position de retenue. Ce faisant, le levier indicateur 20 est revenu sous l'effet de son ressort de rappel à la position indicatrice d'absence d'olive dans le crochet, de sorte que sa surface de butée 27 est revenue en position angulaire P1, repoussant la surface de butée 37 du support mobile 30 de sorte que la cible 31 revient en position éloignée du capteur de proximité 32. Le signal de celui-ci change, indiquant que l'olive 200 n'est plus retenue par le crochet 3, bien que celui-ci reste immobilisé en position de retenue.

Ainsi, et selon une caractéristique essentielle de l'invention, la cible 31 ne peut atteindre la position proche du capteur de proximité 32 que si, simultanément, le crochet 3 est verrouillé en position de retenue et l'olive 200 est effectivement présente dans le crochet. Les dispositions de l'invention permettent de réaliser une fonction logique ET de façon mécanique, ne nécessitant l'usage que d'une cible et d'un capteur.

L'invention n'est pas limitée à ce qui vient d'être décrit, mais englobe au contraire toute variante entrant dans le cadre défini par les revendications.

En particulier, bien qu'ici l'organe de verrouillage 10, le levier indicateur 20 et le support mobile 30 soient tous trois montés pivotants sur le même pivot, ce qui facilite leur coopération via les surfaces de butée, cette configuration n'est pas indispensable, et toute autre configuration permettant de n'autoriser le déplacement du support mobile que si le crochet est en position de retenue et l'olive dans le crochet est envisageable dans le cadre de l'invention. Par exemple, le support mobile peut être monté sur un pivot distinct, ou monté coulissant sur le boîtier d'accrochage, en étant maintenu dans l'une de ses positions par des cames portées par l'organe de verrouillage et le levier indicateur, les cames s'effaçant quand l'organe de verrouillage et le levier indicateur ont pivoté.

Bien qu'ici le support mobile soit en interaction cinématique avec le crochet indirectement via l'organe de verrouillage, et en interaction cinématique avec l'olive indirectement via le levier indicateur, le support mobile pourra être manœuvré directement par le crochet et/ou l'olive de sorte à être en interaction cinématique directe avec ces derniers.

Enfin, bien que le boîtier d'accrochage décrit utilise un capteur de proximité coopérant avec une cible proche ou éloignée, on pourra utiliser d'autres technologies de détection par exemple un capteur à effet hall ou un capteur optique.

## Revendications

1. Boîtier d'accrochage pour la retenue sélective d'une olive (200) d'un élément mobile, le boîtier d'accrochage comportant :
- un crochet (3) mobile entre une position de libération et une position de retenue de l'olive de l'élément mobile,
- un organe de verrouillage (10) mobile entre une position de verrouillage dans laquelle il immobilise le crochet en position de retenue, et une position de déverrouillage dans laquelle le crochet est libre de se déplacer sous la poussée de l'olive de l'élément mobile ;
- des moyens de détection (20, 30,31,32) adaptés à détecter une situation dans laquelle le crochet est en position de retenue et l'olive est présente dans le crochet ;
les moyens de détection comportant :
- un levier indicateur (20) interagissant cinématique-ment avec l'olive (200) et mobile entre une première position indicatrice de l'absence de l'olive dans le crochet et une deuxième position indicatrice de la présence de l'olive dans le crochet ; et
- un capteur (32) associé à une unique cible (31) mobile entre deux positions de sorte que le capteur émet un signal qui est modifié lorsque la cible passe de l'une à l'autre des positions,
**caractérisé en ce que** la cible est portée par un support mobile (30) en interaction cinématique avec l'organe de verrouillage et le levier indicateur de sorte que la cible est maintenue dans l'une de ses positions et ne peut atteindre et rester dans l'autre de ses positions que si l'organe de verrouillage (10) est en position de verrouillage et le levier indicateur (20) est dans la deuxième position indicatrice de la présence de l'olive dans le crochet.

2. Boîtier d'accrochage selon la revendication 1, le levier indicateur (20), l'organe de verrouillage (10) et le support mobile sont montés pivotants selon un même axe de pivotement (X2).

3. Boîtier d'accrochage selon la revendication 2, dans lequel l'interaction cinématique entre le support mobile (30) et l'organe de verrouillage (10) et le levier indicateur (20) est réalisée au moyen d'une surface d'appui (37) du support mobile (30) coopérant avec des surfaces d'appui respectives (17,27) de l'organe de verrouillage (10) et du levier indicateur (20).

4. Boîtier d'accrochage selon la revendication 3, dans lequel la surface d'appui (37) du support mobile (30) est maintenue dans une première position angulaire (P1) par l'une ou l'autre des surfaces d'appui respectives (17,27) de l'organe de verrouillage (10) et du levier indicateur (20) lorsque le crochet n'est pas verrouillé ou le levier indicateur est dans la première position indicatrice d'absence de l'olive dans le crochet, et ne peut atteindre une deuxième position angulaire (P2) que si le crochet est verrouillé et le levier indicateur est dans la deuxième position indicatrice de présence de l'olive dans le crochet.

## Patentansprüche

1. Sicherungsmechanismus zum selektiven Halten einer Olive (200) eines beweglichen Elements, wobei der Sicherungsmechanismus enthält:
- einen Haken (3), der zwischen einer Freigabestellung und einer Haltestellung der Olive des beweglichen Elements beweglich ist,
- ein Verriegelungsorgan (10), das zwischen einer Verriegelungsstellung, in welcher der Haken in der Haltestellung festgestellt wird, und einer Entriegelungsstellung, in welcher sich der Haken unter dem Druck der Olive des beweglichen Elements frei bewegen kann, beweglich ist;
- Detektionsmittel (20, 30, 31, 32), die dafür angepasst sind, eine Situation zu erkennen, in welcher sich der Haken in der Haltestellung befindet und die Olive innerhalb des Hakens vorhanden ist;
wobei die Detektionsmittel enthalten:
- einen Anzeigehebel (20), der in kinematischer Wechselwirkung mit der Olive (200) steht und zwischen einer ersten Anzeigestellung, die das Nicht-Vorhandensein der Olive innerhalb des Haken anzeigt, und einer zweiten Anzeigestellung, die das Vorhandensein der Olive innerhalb des Hakens anzeigt, beweglich ist; und
- einen Sensor (32), welcher derart einem einzigen, zwischen zwei Stellungen beweglichen Ziel (31) zugeordnet ist, dass der Sensor ein Signal aussendet, das sich verändert, sobald das Ziel von einer Stellung in die andere Stellung übergeht,
**dadurch gekennzeichnet, dass** das Ziel von einem beweglichen Träger (30) getragen wird, der derart in kinematischer Wechselwirkung mit dem Verriegelungsorgan und dem Anzeigehebel steht, dass das Ziel in einer seiner Positionen gehalten wird und erst dann in die jeweils andere Position übergehen und dort verbleiben kann, wenn sich das Verriegelungsorgan (10) in der Verriegelungsstellung befindet und sich der Anzeigehebel (20) in der zweiten Anzeigestellung befindet, die das Vorhandensein der Olive innerhalb des Hakens anzeigt.

2. Sicherungsmechanismus nach Anspruch 1, wobei der Anzeigehebel (20), das Verriegelungsorgan (10) und der bewegliche Träger um ein und dieselbe Schwenkachse (X2) schwenkbar angebracht sind.

3. Sicherungsmechanismus nach Anspruch 2, wobei die kinematische Wechselwirkung zwischen dem beweglichen Träger (30) und dem Verriegelungsorgan (10) und dem Anzeigehebel (20) über eine Auflagefläche (37) des beweglichen Trägers (30) erfolgt, die mit entsprechenden Auflageflächen (17, 27) des Verriegelungsorgans (10) und des Anzeigehebels (20) zusammenwirkt.

4. Sicherungsmechanismus nach Anspruch 3, wobei die Auflagefläche (37) des beweglichen Trägers (30) von einer der jeweiligen Auflageflächen (17, 27) des Verriegelungsorgans (10) und des Anzeigehebels (20) in einer ersten Winkelstellung (P1) gehalten wird, wenn der Haken nicht verriegelt ist bzw. sich der Anzeigehebel in der ersten Anzeigestellung befindet, die das Nicht-Vorhandensein der Olive innerhalb des Hakens anzeigt, und erst dann in eine zweite Winkelstellung (P2) übergehen kann, wenn der Haken verriegelt ist und sich der Anzeigehebel in der zweiten Anzeigestellung befindet, die das Vorhandensein der Olive innerhalb des Hakens anzeigt.

## Claims

1. An uplock for selectively retaining a capture pin (200) of a movable element, the uplock comprising:
a hook (3) which is movable between a release position and a position for retaining the capture pin of the movable element;
a locking member (10) which is movable between a locked position in which it immobilizes the hook in the retaining position and an unlocked position in which the hook is free to be displaced under the force of the capture pin of the movable element;
detection means (30, 31, 32) adapted to detect a situation in which the hook is in the retaining position and the capture pin is present in the hook;
the detection means comprising:
- an indicator lever (20) interacting kinematically with the capture pin (200) and movable between a first position indicating the absence of the capture pin in the hook and a second position indicating the presence of the capture pin in the hook; and
- a sensor (32) associated with a single target (31) which is movable between two positions so that the sensor emits a signal which is modified when the target passes from one of the positions to the other,
**characterised in that** the target is carried by a movable support (30) in kinematic interaction with the locking member and the indicator lever so that the target is held in one of its positions and can only reach and remain in the other of its positions if the locking member (10) is in the locked position and the indicator lever (20) is in the second position indicating the presence of the capture pin in the hook.

2. The uplock as claimed in claim 1, in which the indicator lever (20), the locking member (10) and the movable support are pivotally mounted about the same pivot axis (X2).

3. The uplock as claimed in claim 2, in which the kinematic interaction between the movable support (30) and the locking member (10) and the indicator lever (20) is achieved by means of a bearing surface (37) of the movable support (30) cooperating with respective bearing surfaces (17, 27) of the locking member (10) and of the indicator lever (20).

4. the uplock as claimed in claim 3, in which the bearing surface (37) of the movable support (30) is held in a first angular position (P1) by either of the respective bearing surfaces (17, 27) of the locking member (10) and of the indicator lever (20) when the hook is not locked or the indicator lever is in the first position indicating the absence of the capture pin in the hook, and can only reach a second angular position (P2) if the hook is locked and the indicator lever is in the second position indicating the presence of the capture pin in the hook.
